# EUROPÄISCHE PATENTSCHRIFT

(11) **EP 1 629 580 B1**
(45) Veröffentlichungstag und Bekanntmachung des Hinweises auf die Patenterteilung: **06.07.2011**
(21) Anmeldenummer: 04730829.1
(22) Anmeldetag: 03.05.2004
(51) Int. Cl.: H02B 13/035

(54) **SCHALTERANORDNUNG**
SWITCH ASSEMBLY
ENSEMBLE COMMUTATEUR

(30) Priorität: 02.06.2003 DE 10325681
(43) Veröffentlichungstag der Anmeldung: 01.03.2006
(73) Patentinhaber: SIEMENS AKTIENGESELLSCHAFT, 80333 München (DE)
(72) Erfinder: MEINHERZ, Manfred, 13467 Berlin (DE)
(86) Internationale Anmeldenummer: PCT/DE2004/000982
(87) Internationale Veröffentlichungsnummer: WO 2004/109880

(56) Entgegenhaltungen:
- US-A- 4 434 334
- US-A1- 2002 012 225

## Beschreibung

Die Erfindung betrifft eine Schalteranordnung mit einer Unterbrechereinheit, die innerhalb eines im wesentlichen rohrförmigen Kapselungsgehäuses angeordnet ist, wobei die Unterbrechereinheit eine Hauptstrombahn mit einem ersten und einem zweiten Ende aufweist, zwischen denen eine Schaltstrecke der Unterbrechereinheit angeordnet ist und eine erste Ausleitung stirnseitig aus dem Kapselungsgehäuse herausgeführt ist und eine zweite Ausleitung mantelseitig aus dem Kapselungsgehäuse herausgeführt ist und der Unterbrechereinheit eine dritte Ausleitung zugeordnet ist.

Aus den Patentschriften US 6,538,224 B2 sowie US 6,459,568 B2 sind gasisolierte Hybridschaltgeräte bekannt. Die dortigen Hybridschaltgeräte weisen jeweils Kombinationen aus Unterbrechereinheiten eines Leistungsschalters sowie einem oder mehreren Trennschaltern auf.

Desweiteren ist aus der US-Patentschrift US 4,434,334 ein Leistungsschalter bekannt, dessen Unterbrechereinheiten jeweils in Erdpotential führenden Gehäusen angeordnet sind. Zur Hindurchführung der elektrischen Anschlussleiter zu den Unterbrechereinheiten sind an das Gehäuse Freiluftdurchführungen angeflanscht. Im montierten Zustand weisen die Gehäuse eine schräge Lage auf.

Eine weitere Schalteranordnung geht beispielsweise aus der Offenlegungsschrift DE 101 19 530 A1 hervor. Bei der bekannten Anordnung ist eine Unterbrechereinheit mit ihrer Hauptstrombahn innerhalb eines Kapselungsgehäuses angeordnet. Stirnseitig ist ein Baustein mit einem Trennschalter und einem Erdungsschalter angeordnet, an welchem Durchführungen angeordnet sind. Das Kapselungsgehäuse ist im wesentlichen rohrförmig ausgestaltet. Die Rohrachse des rohrförmigen Kapselungsgehäuses ist horizontal angeordnet. Mantelseitig an dem Kapselungsgehäuse sind weitere Bausteine angeflanscht, in welchen Sammelschienen geführt sind.

Eine derartige Schalteranordnung benötigt neben dem Kapselungsgehäuse eine Vielzahl von weiteren Bausteinen. Weiterhin benötigt die bekannte Schalteranordnung eine große Aufstellfläche.

Der Erfindung liegt die Aufgabe zugrunde eine Schalteranordnung der eingangs genannten Art so auszugestalten, dass die Schalteranordnung kostengünstig ist und eine geringe Aufstellfläche benötigt.

Erfindungsgemäß wird dies dadurch erreicht, dass die Rohrachse des im wesentlichen rohrförmigen Kapselungsgehäuses im betriebsbereiten Zustand der Schalteranordnung verschieden von der Vertikalen und von der Horizontalen ist und die erste und die zweite Ausleitung mit dem ersten Ende der Hauptstrombahn elektrisch leitend verbunden sind und die dritte Ausleitung mit dem zweiten Ende der Hauptstrombahn elektrisch leitend verbunden ist.

Die schräge Anordnung der Rohrachse ermöglicht eine Aufstellung der Schalteranordnung auf einer kleinen Grundfläche. Das Kapselungsgehäuse ist auf einem Traggestell befestigt, welches das Kapselungsgehäuse an einem Ende abstützt. Die gesamte Schalteranordnung erhält durch diese Ausrichtung eine aufrechte, an einer Vertikalen orientierte Kontur. Der elektrische Anschluss zweier Ausleitungen an das gleiche Ende der Hauptstrombahn ermöglicht eine Aufteilung einer zu schaltenden Leitung auf zwei Abgänge. Eine derartige Schalteranordnung ist beispielsweise in einer Hochspannungsschaltanlage einsetzbar. Dabei kann die Schalteranordnung einpolig oder mehrpolig gekapselt ausgeführt sein, wobei das Kapselungsgehäuse mit einem unter erhöhtem Druck stehenden Isoliergas befüllt ist.

Eine weitere vorteilhafte Ausgestaltung sieht vor, dass die dritte Ausleitung mantelseitig aus dem Kapselungsgehäuse geführt ist.

Bei der Anordnung der zweiten Ausleitung und der dritten Ausleitung im Mantelbereich des Kapselungsgehäuses ist das erste und das zweite Ende der Hauptstrombahn mantelseitig elektrisch kontaktierbar. Somit ist das Kapselungsgehäuse auch für die Ausbildung eines herkömmlichen Dead-Tank-HochspannungsLeistungsschalters mit waagerecht angeordneter Unterbrechereinheit verwendbar. Damit ist das Kapselungsgehäuse vielseitig einsetzbar.

Vorteilhaft kann weiter vorgesehen sein, dass zumindest einer der Ausleitungen ein Trennschalter zugeordnet ist.

Eine Zuordnung von Trennschaltern gestattet es die Schalteranordnung in Schaltanlagen zu verwenden, in denen bisher separate Trennschalter und separate Leistungsschalter Verwendung fanden. Insbesondere bei einer Zuordnung jeweils eines Trennschalters zu jeder Ausleitung sind vielfältige Schaltungsvarianten mit der Schalteranordnung durchzuführen. Zur Anzeige der Stellung der Trennschalter können Anzeigemittel vorgesehen sein.

Es kann weiter vorteilhaft vorgesehen sein, dass zumindest eine der ersten oder der zweiten Ausleitungen einen Erdungsschalter aufweist und die dritte Ausleitung einen Erdungsschalter aufweist.

Mittels der Erdungsschalter ist die Unterbrechereinheit erdbar. Dabei sind die beiden Enden der Unterbrechereinheit separat über die zugeordneten Erdungsschalter erdbar. In einer entsprechenden Schaltungsvariante sind die, sich an die Ausleitungen anschließenden Freileitungen, Sammelschienen, Kabel usw. ebenfalls über die Erdungsschalter erdbar.

Eine weitere Ausgestaltung kann vorsehen, dass zumindest eine der Ausleitungen als Freiluftdurchführung ausgebildet ist oder die erste, die zweite und die dritte Ausleitung als Freiluftdurchführungen ausgebildet sind.

Eine Freiluftdurchführungen ist eine kostengünstige Variante die Ausleitungen gasdicht durch das Kapselungsgehäuse hindurchzuführen. An Freiluftdurchführungen können elektrische Leitungen unmittelbar angeschlossen werden. Eine Schalteranordnung mit einer Unterbrechereinheit, Trennschaltern und Erdungsschaltern ist als Schaltfeld in einer Schaltanlage einsetzbar. Derartige kompakte Schalteranordnungen sind beispielsweise auch dazu geeignet bisher in Freiluftisolation ausgeführte Schaltfelder zu ersetzen.

Weiter kann vorteilhaft vorgesehen sein, das der/ die Trennschalter in die Freiluftdurchführung(en) integriert ist/sind.

Eine Integration der Trennschalter in die Freiluftdurchführung bewirkt eine unwesentliche Vergrößerung des Bauvolumens herkömmlicher Freiluftdurchführungen. Bisher zur Steuerung der Spannungsverteilung genutzte Volumina sind beispielweise verwendbar, um Antriebselemente oder bewegbare Elemente aufzunehmen.

Weiter kann vorteilhafter Weise vorgesehen sein, dass eine der Freiluftdurchführungen vertikal angeordnet ist und zwei weitere Freiluftdurchführungen fächerförmig, symmetrisch zu der vertikalen Freiluftdurchführung angeordnet sind.

Diese Anordnung der Durchführungen gestattet eine annähernd gleichmäßige Masseverteilung an der Schalteranordnung. Dadurch ist es möglich das Traggestell zur Halterung der Schalteranordnung auf einer kleinen Grundfläche, einem Fundament oder ähnlichem, anzuordnen.

Eine weitere vorteilhafte Ausgestaltung kann vorsehen, dass eine Längsachse einer mantelseitig angeordneten Freiluftdurchführung radial zur Rohrachse des Kapselungsgehäuses angeordnet ist und eine Längsachse einer anderen mantelseitig angeordneten Freiluftdurchführung schräg, zur einer Radialen der Rohrachse geneigt angeordnet ist.

Mittels der Freiluftdurchführungen sind die Ausleitungen isoliert durch das Kapselungsgehäuse hindurchgeführt. Entlang der Längsachsen der Freiluftdurchführungen erstrecken sich die Ausleitungen.

Vorteilhafterweise kann weiterhin vorgesehen sein, dass Isolatoren zur Halterung der Unterbrechereinheit seitlich an der Unterbrechereinheit angeordnet sind.

Die Isolatoren können beispielsweise als säulenförmige Stützisolatoren ausgebildet sein. Die Längsachsen solcher säulenförmiger Stützisolatoren liegen vorzugsweise radial zur Rohrachse des Kapselungsgehäuses. Sie könne bei Bedarf jedoch auch schräg zu dieser Rohrachse angeordnet sein.

Im Folgenden sind Ausführungsbeispiele der Erfindung schematisch gezeigt und nachfolgend beschrieben.

Dabei zeigt die
- Figur 1: eine erste Ausgestaltungsvariante einer Schal- teranordnung,
- Figur 2: eine zweite Ausgestaltungsvariante einer Schalteranordnung und die
- Figur 3: eine dritte Ausgestaltungsvariante einer Schalteranordnung.

Die in den Figuren gezeigten Ausgestaltungsvarianten sind in ihrem grundsätzlichen Aufbau sehr ähnlich. Sie unterscheiden sich in einzelnen Details. Die in den verschiedenen Figuren dargestellten gleichwirkenden Vorrichtungen sind mit den gleichen Bezugszeichen versehen.

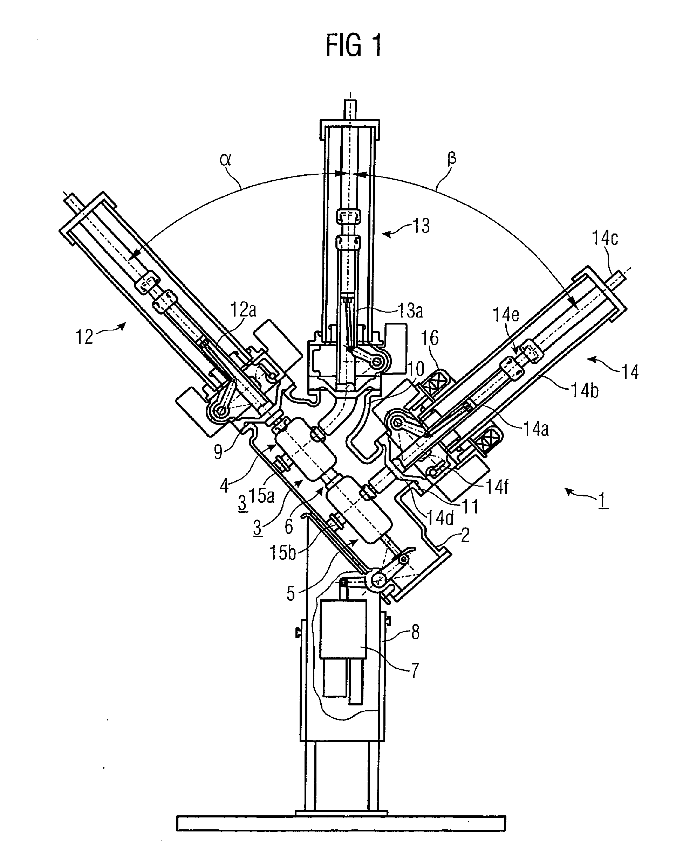

Die Figur 1 zeigt eine erste Ausgestaltungsvariante einer Schalteranordnung 1. Die erste Ausgestaltungsvariante der Schalteranordnung 1 weist ein im wesentlichen rohrförmiges Kapselungsgehäuse 2 auf. Längs der Rohrachse des Kapselungsgehäuses 2 ist in dessen Inneren eine Unterbrechereinheit 3 angeordnet. Die Unterbrechereinheit 3 weist ein erstes Ende 4 und ein zweites Ende 5 einer Hauptstrombahn auf. Zwischen dem ersten und dem zweiten Ende 4, 5 der Unterbrechereinheit 3 ist eine Schaltstrecke 6 der Unterbrechereinheit 3 angeordnet. Mit Hilfe der Schaltstrecke 6 ist die Hauptstrombahn unterbrechbar. Die Unterbrechereinheit 3 ist eine Unterbrechereinheit eines Hochspannungsleistungsschalters. Das Innere des Kapselungsgehäuses 2 ist mit einem unter erhöhtem Druck stehenden Isoliergas befüllt. Die Schaltstrecke 6 weist zwei relativ zueinander bewegbare Kontaktstücke auf, von denen zumindest eines mittels einer Antriebseinrichtung 7 bewegbar ist. Die Antriebseinrichtung 7 ist von einem Traggestell 8 gehalten. Die von der Antriebseinrichtung 7 bewirkte Bewegung wird über eine kinematische Kette durch eine Wandung des Kapselungsgehäuses 2 in dessen Inneres übertragen. Das Traggestell 8 weist einen Geräteschrank auf, in dessen Inneren neben der Antriebseinrichtung 7 auch weitere Steuer- und Überwachungseinrichtungen untergebracht sein können.

Das Traggestell 8 trägt weiterhin das Kapselungsgehäuse 2 mit den daran angebrachten Anbauteilen. Die Rohrachse des Kapselungsgehäuses 2 ist in der Betriebslage der Schalteranordnung verschieden von einer Horizontalen und von einer Vertikalen. Die Rohrachse liegt in einem Winkel von ca. 45 Grad zu der Horizontalen. Die Lage kann dabei je nach Aufstellungsort der Schalteranordnung um bis zu plus, minus 20 Grad abweichen.

Das Kapselungsgehäuse 2 weist stirnseitig einen ersten Anschlussflansch 9 auf. Mantelseitig sind eine zweiter und ein dritter Anschlussflansch 10, 11 angeordnet. Eine erste Freiluftdurchführung 12 mit einer ersten Ausleitung 12a ist an dem ersten Anschlussflansch 9 angeordnet. An dem zweiten Anschlussflansch 10 ist eine zweite Freiluftdurchführung 13 mit einer zweiten Ausleitung 13a angeordnet. An dem dritten Anschlussflansch 11 ist eine dritte Freiluftdurchführung 14 mit einer dritten Ausleitung 14a angeflanscht. Die erste und die zweite Ausleitung 12a, 13a sind an dem ersten Ende 4 der Unterbrechereinheit 3 angeschlossen. Die dritte Ausleitung 14a ist mit dem zweiten Ende 5 der Unterbrechereinheit elektrisch leitend verbunden. Die Freiluftdurchführungen 12, 13, 14 dienen der isolierten Durchführung der elektrischen Leiter durch das Kapselungsgehäuse 2, welches beispielsweise ein metallischer Körper ist und Erdpotential aufweist. Die Freiluftdurchführungen 12, 13, 14 ragen im wesentlichen aufrecht von dem Traggestell 8 fort.

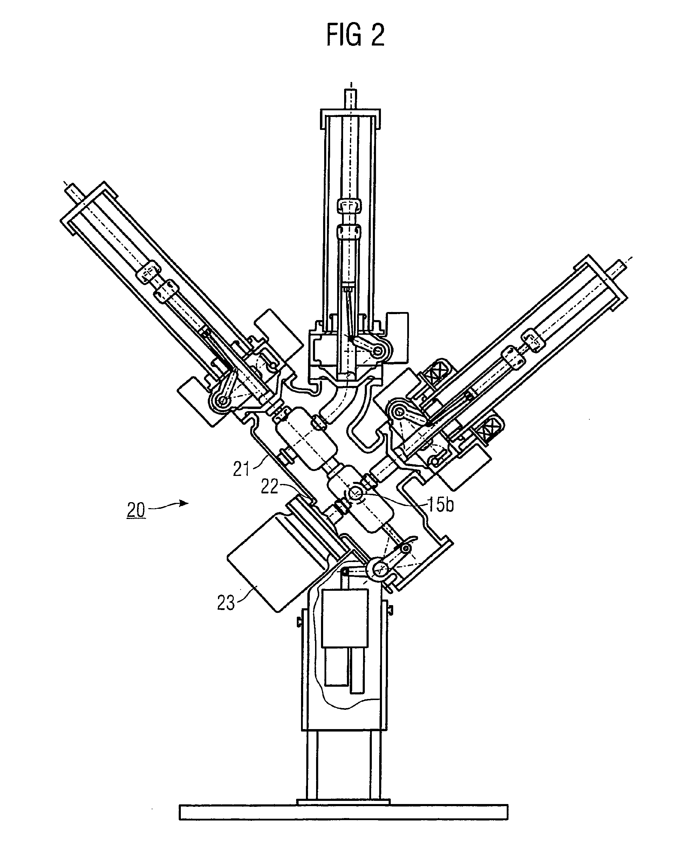

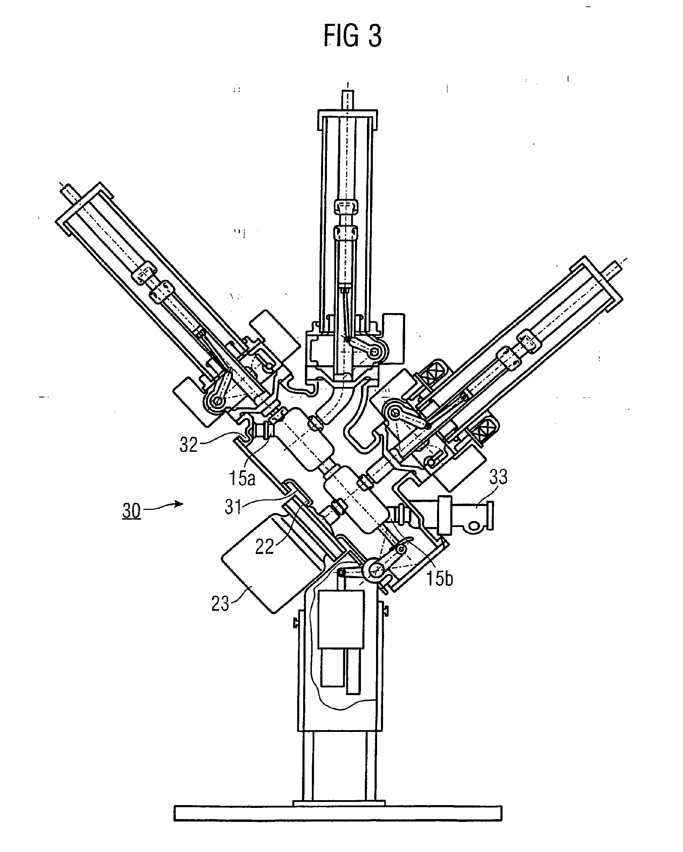

Die Unterbrechereinheit 3 ist gegenüber dem Kapselungsgehäuse 2 elektrisch isoliert angeordnet. Dazu sind Isolierstützer 15a, b zwischen dem Kapselungsgehäuse 2 und der Unterbrechereinheit 3 angeordnet. Je nach der Form des Kapselungsgehäuses 2 und der Unterbrechereinheit 3 können die Montageorte der Isolierstützer 15a, b längs der Unterbrechereinheit 3 verschoben werden (vgl. Fig 2 und 3).

Der zweite Anschlussflansch 10 ist knieförmig an dem Mantel des Kapselungsgehäuses 2 angesetzt. Alternativ kann auch vorgesehen sein, ein knieförmiges Zwischenstück auf einen am Mantel angeordneten Flansch zu setzen. Der Bogen des Knies ist so gewählt, dass die am zweiten Anschlussflansch 10 angeflanschte zweite Freiluftdurchführung 13 annähernd vertikal ausgerichtet ist. Im montierten Zustand der Schalteranordnung 2 sind die zwischen den Längsachsen der zweiten Freiluftdurchführung 13 und der ersten Freiluftdurchführung 12 sowie zwischen den Längsachsen der zweiten Freiluftdurchführung 13 und der dritten Freiluftdurchführung 14 aufgespannten Winkel α,β annähernd gleich.

Beispielhaft soll nunmehr der Aufbau der dritten Freiluftdurchführung 14 beschieben werden. Die Freiluftdurchführung 14 weist ein Isoliergehäuse 14b auf. An dem freien Ende der dritten Freiluftdurchführung 14 ist ein Anschlussbolzen 14c angeordnet. Am Fußpunkt der Freiluftdurchführung ist ein Schottisolator 14d angeordnet. Im Innern der dritten Freiluftdurchführung ist die dritte Ausleitung 14a isoliert gehalten. In den Leiterzug der dritten Ausleitung 14a ist die Trennstelle eines Trennschalters 14e integriert. Weiterhin weist die dritte Freiluftdurchführung 14 einen Erdungsschalter 14f auf. Mittels des Trennschalters 14e ist das zweite Ende 5 der Unterbrechereinheit 3 von einem am Anschlussbolzen 14c kontaktierten elektrischen Leiter trennbar und über den Erdungsschalter 14f erdbar. Bei geschlossenem Trennschalter 14f ist auch ein am Anschlussbolzen 14c kontaktierter elektrischer Leiter erdbar.

Der dritten Freiluftdurchführung 14 ist ein Stromwandler 16 zugeordnet, mit dessen Hilfe ein durch die dritte Ausleitung fließender elektrischer Strom gemessen werden kann.

Die erste Freiluftdurchführung 12 weist einen gleichartigen Aufbau auf wie die dritte Freiluftdurchführung 14. Die zweite Freiluftdurchführung 13 ist vereinfacht aufgebaut. Da deren Ausleitung mit dem gleichen Ende der Unterbrechereinheit 3 elektrisch kontaktiert ist wie die Ausleitung der ersten Freiluftdurchführung 12 ist ein Erdungsschalter nicht notwendig. Ebenso wurde auf einen Stromwandler verzichtet. Bei Bedarf kann jedoch auch die zweite Freiluftdurchführung 13 damit ausgestattet werden.

Mittels einer derartigen Schalteranordnung ist beispielsweise eine Zuleitung über die dritte Freiluftdurchführung 14 und über die erste und die zweite Freiluftdurchführung 12, 13 an zwei Sammelschienen anschließbar. Über die Unterbrechereinheit 3 erfolgt ein schalten der Zuleitung. Über die Trennschalter der ersten und der zweiten Freiluftdurchführung 12, 13 eine Verteilung auf die jeweiligen Sammelschienen. Weiterhin können Sammelschienenwechsel vorgenommen werden und über die Erdungsschalter Sammelschienenabschnitte, die Unterbrechereinheit 3 mit den angeschlossenen Ausleitungen oder auch die Zuleitung geerdet werden.

Die in der Figur 2 gezeigte zweite Ausgestaltungsvariante einer Schalteranordnung 20 weist grundsätzlich den gleichen Aufbau auf wie die erste Ausgestaltungsvariante 1. Das Kapselungsgehäuse 21 weist zusätzlich mantelseitig einen vierten Anschlussflansch 22 auf. An den vierten Anschlussflansch ist zur Spannungsmessung ein Spannungswandler 23 angeflanscht. Aufgrund des vierten Anschlussflansches 22 ist die Lage des Isolierstützers 15b verändert.

Die in der Figur 3 dargestellte dritte Ausgestaltungsvariante 30 weist prinzipiell den gleichen Aufbau auf wie die erste und die zweite Ausgestaltungsvariante 1, 20.

Das Kapselungsgehäuse 31 der dritten Ausgestaltungsvariante 30 weist mantelseitig einen fünften Anschlussflansch 32 auf. Durch diesen Anschlussflansch ist das Innere des Kapselungsgehäuses 31 für Montagezwecke zugänglich. Weiterhin ist ein weiterer Erdungsschalter 33 am Kapselungsgehäuse 31 angeordnet. Der weitere Erdungsschalter 33 ist beispielsweise bei Wartungsarbeiten vor Ort bedienbar und erdet die Unterbrechereinheit. Die Lage der Stützisolatoren 15a, b ist an die Gestalt des Kapselungsgehäuses 31 angepasst.

Die verschiedenen Ausgestaltungsvarianten sind in ihren Details miteinander kombinierbar, so dass auch Ausgestaltungen erzeugbar sind die nicht in den Figuren dargestellt sind. Weiterhin ist die Erfindung nicht auf die in den Figuren gezeigte einpolige Kapselung beschränkt. Ausführungen können auch vorsehen, elektrische Leiter mehrerer Phasen innerhalb eines gemeinsamen Gehäuses anzuordnen. Dann sind beispielsweise die Freiluftdurchführungen in mehreren Ebenen strahlenförmig von dem Kapselungsgehäuse fortragend anzuordnen.

## Patentansprüche

1. Schalteranordnung (1, 20, 30) mit einer Unterbrechereinheit (3), die innerhalb eines im wesentlichen rohrförmigen Kapselungsgehäuses (2, 21, 31) angeordnet ist, wobei die Unterbrechereinheit (3) eine Hauptstrombahn mit einem ersten und einem zweiten Ende (4, 5) aufweist, zwischen denen eine Schaltstrecke der Unterbrechereinheit (3) angeordnet ist und eine erste Ausleitung (12a) stirnseitig aus dem Kapselungsgehäuse (2, 21, 31) herausgeführt ist und eine zweite Ausleitung (13a) mantelseitig aus dem Kapselungsgehäuse (2, 21, 31) herausgeführt ist und der Unterbrechereinheit (3) eine dritte Ausleitung (14a) zugeordnet ist,
**dadurch gekennzeichnet, dass** die Rohrachse des im wesentlichen rohrförmigen Kapselungsgehäuses (2, 21, 31) im betriebsbereiten Zustand der Schalteranordnung (1, 20, 30) verschieden von der Vertikalen und von der Horizontalen ist und die erste und die zweite Ausleitung (12a, 13a) mit dem ersten Ende (4) der Hauptstrombahn elektrisch leitend verbunden sind und die dritte Ausleitung (14a) mit dem zweiten Ende (5) der Hauptstrombahn elektrisch leitend verbunden ist.

2. Schalteranordnung (1, 20, 30) nach Anspruch 1,
**dadurch gekennzeichnet, dass** die dritte Ausleitung (14a) mantelseitig aus dem Kapselungsgehäuse (2, 21,31) geführt ist.

3. Schalteranordnung (1, 20, 30) nach einem der Ansprüche 1 oder 2,
**dadurch gekennzeichnet, dass** zumindest einer der Ausleitungen (14a) ein Trennschalter
(14e) zugeordnet ist.

4. Schalteranordnung (1, 20, 30) nach Anspruch 3,
**dadurch gekennzeichnet, dass** jeder Ausleitung(12a, 13a, 14a) ein Trennschalter zugeordnet ist.

5. Schalteranordnung (1, 20, 30) nach einem der Ansprüche 1 bis 4,
**dadurch gekennzeichnet, dass** zumindest eine der ersten oder der zweiten Ausleitungen (12a, 13a) einen Erdungsschalter aufweist und die dritte Ausleitung (14a) einen Erdungsschalter (14f) aufweist.

6. Schalteranordnung (1, 20, 30) nach einem der Ansprüche 1 bis 5,
**dadurch gekennzeichnet, dass** zumindest eine der Ausleitungen (14a) als Freiluftdurchführung (14) ausgebildet ist.

7. Schalteranordnung (1, 20, 30) nach Anspruch 6,
**dadurch gekennzeichnet, dass** die erste, die zweite und die dritte Ausleitung (12a, 13a, 14a) als Freiluftdurchführungen (12, 13, 14) ausgebildet sind.

8. Schalteranordnung (1, 20, 30) nach Anspruch 6 oder 7,
**dadurch gekennzeichnet, dass** der/ die Trennschalter (14e) in die Freiluftdurchführung(en) (14) integriert ist/ sind.

9. Schalteranordnung (1, 20, 30) nach Anspruch 7 oder 8,
**dadurch gekennzeichnet, dass**
eine der Freiluftdurchführungen (13) vertikal angeordnet ist und zwei weitere Freiluftdurchführungen (12, 14) fächerförmig, symmetrisch zu der vertikalen Freiluftdurchführung (13) angeordnet sind.

10. Schalteranordnung (1, 20, 30) nach einem der Ansprüche 7 bis 10,
**dadurch gekennzeichnet, dass** eine Längsachse einer mantelseitig angeordneten Freiluftdurchführung (14) radial zur Rohrachse des Kapselungsgehäuses (2, 21,31) angeordnet ist und eine Längsachse einer anderen mantelseitig angeordneten Freiluftdurchführung (13) schräg, zur einer Radialen der Rohrachse geneigt angeordnet ist.

11. Schalteranordnung (1, 20, 30) nach einem der Ansprüche 7 bis 10,
**dadurch gekennzeichnet, dass** Isolatoren (15a, b) zur Halterung der Unterbrechereinheit (3) seitlich an der Unterbrechereinheit (3) angeordnet sind.

## Claims

1. Switch arrangement (1, 20, 30) having an interrupter unit (3) which is arranged within an essentially tubular encapsulation enclosure (2, 21, 31), with the interrupter unit (3) having a main current path with a first and a second end (4, 5), between which a switching gap of the interrupter unit (3) is arranged, and a first output line (12a) is passed out of the end face of the encapsulation enclosure (2, 21, 31) and a second output line (13a) is passed out of the casing of the encapsulation enclosure (2, 21, 31), and the interrupter unit (3) has a third associated output line (14a),
**characterized in that**
the tube axis of the essentially tubular encapsulation enclosure (2, 21, 31) when the switch arrangement (1, 20, 30) is in the ready-to-operate state is not vertical or horizontal, the first and the second output lines (12a, 13a) are electrically conductively connected to the first end (4) of the main current path, and the third output line (14a) is electrically conductively connected to the second end (5) of the main current path.

2. Switch arrangement (1, 20, 30) according to Claim 1,
**characterized in that**
the third output line (14a) is passed out of the casing of the encapsulation enclosure (2, 21, 31).

3. Switch arrangement (1, 20, 30) according to one of Claims 1 or 2,
**characterized in that**
at least one of the output lines (14a) has an associated switch disconnector (14e).

4. Switch arrangement (1, 20, 30) according to Claim 3,
**characterized in that**
each output line (12a, 13a, 14a) has an associated switch disconnector.

5. Switch arrangement (1, 20, 30) according to one of Claims 1 to 4,
**characterized in that**
at least one of the first or second output lines (12a, 13a) has a grounding switch, and the third output line (14a) has a grounding switch (14f).

6. Switch arrangement (1, 20, 30) according to one of Claims 1 to 5,
**characterized in that**
at least one of the output lines (14a) is in the form of an outdoor bushing (14).

7. Switch arrangement (1, 20, 30) according to Claim 6,
**characterized in that**
the first, the second and the third output lines (12a, 13a, 14a) are in the form of outdoor bushings (12, 13, 14).

8. Switch arrangement (1, 20, 30) according to Claim 6 or 7,
**characterized in that**
the switch disconnector or disconnectors (14e) is or are integrated in the outdoor bushing or bushings (14).

9. Switch arrangement (1, 20, 30) according to Claim 7 or 8,
**characterized in that**one of the outdoor bushings (13) is arranged vertically and two further outdoor bushings (12, 14) are arranged in the form of a fan, symmetrically with respect to the vertical outdoor bushing (13).

10. Switch arrangement (1, 20, 30) according to one of Claims 7 to 10,
**characterized in that**
the longitudinal axis of an outdoor bushing (14) which is arranged on the casing side is arranged radially with respect to the tube axis of the encapsulation enclosure (2, 21, 31), and the longitudinal axis of another outdoor bushing (13) which is arranged on the casing side is arranged obliquely, at an angle to a radial of the tube axis.

11. Switch arrangement (1, 20, 30) according to one of Claims 7 to 10,
**characterized in that**
isolators (15a, b) for holding the interrupter unit (3) are arranged at the side on the interrupter unit (3).

## Revendications

1. Ensemble ( 1, 20, 30 ) commutateur comprenant une unité ( 3 ) d'interruption, qui est disposée à l'intérieur d'un boîtier ( 2, 21, 31 ) de blindage sensiblement tubulaire, l'unité (3) d'interruption ayant une voie de courant principal ayant une première et une deuxième extrémités ( 4, 5 ), entre lesquelles est disposée une section de commutation de l'unité (3) d'interruption et une première ligne ( 12a ) de sortie est sortie du côté frontal du boîtier ( 2, 21, 31 ) de blindage et une deuxième ligne ( 13a ) de sortie est sortie du côté de la surface latérale du boîtier ( 2, 21, 31 ) de blindage et une troisième ligne ( 14a ) de sortie est associée à l'unité ( 3 ) d'interruption,
**caractérisé en ce que**
l'axe de tube du boîtier ( 2, 21, 31 ) de blindage sensiblement tubulaire est, dans l'état prêt à fonctionner de l'ensemble ( 1, 20, 30 ) de commutateur, différent de la verticale et de l'horizontale et la première et la deuxième lignes ( 12a, 13a ) de sortie sont reliées d'une manière conductrice de l'électricité à la première extrémité ( 4 ) de la voie de courant principale et la troisième ligne ( 14a ) de sortie est reliée d'une manière conductrice de l'électricité à la deuxième extrémité ( 5 ) de la voie de courant principale.

2. Ensemble ( 1, 20, 30 ) commutateur suivant la revendication 1,
**caractérisé en ce que**
la troisième ligne ( 14a ) de sortie est guidée du côté de la surface latérale hors du boîtier (2, 21, 31) de blindage.

3. Ensemble (1, 20, 30) commutateur suivant l'une des revendications 1 ou 2,
**caractérisé en ce qu'**un sectionneur ( 14e ) est associé à au moins l'une des lignes ( 14a ) de sortie.

4. Ensemble ( 1, 20, 30 ) commutateur suivant la revendication 3,
**caractérisé en ce qu'**un sectionneur est associé à chaque ligne ( 12a, 13a, 14a ) de sortie.

5. Ensemble ( 1, 20, 30 ) commutateur suivant l'une des revendications 1 à 4,
**caractérisé en ce qu'**au moins l'une de la première ou de la deuxième ligne ( 12a, 13a ) de sortie a un commutateur de mise à la terre et la troisième ligne ( 14a ) de sortie a un commutateur ( 14f ) de mise à la terre.

6. Ensemble ( 1, 20, 30 ) commutateur suivant l'une des revendications 1 à 5,
**caractérisé en ce qu'**au moins l'une des lignes ( 14a ) de sortie est constituée sous la forme d'une traversée ( 14 ) pour l'extérieur.

7. Ensemble ( 1, 20, 30 ) commutateur suivant la revendication 6,
**caractérisé en ce que** la première, la deuxième et la troisième lignes ( 12a, 13a, 14a ) de sortie sont constituées sous la forme de traversées ( 12, 13, 14 ) pour l'extérieur.

8. Ensemble ( 1, 20, 30 ) commutateur suivant la revendication 6 ou 7,
**caractérisé en ce que** le/les sectionneur(s) ( 14e ) est/sont intégré(s) à la (aux) traversée(s) (14) pour l'extérieur.

9. Ensemble (1, 20, 30) commutateur suivant la revendication 7 ou 8,
**caractérisé en ce que**
l'une des traversées ( 13 ) pour l'extérieur est disposée verticalement et les deux autres traversées ( 12, 14 ) pour l'extérieur sont disposées en éventail symétriquement par rapport à la traversée ( 13 ) pour l'extérieur qui est verticale.

10. Ensemble (1, 20, 30 ) commutateur suivant l'une des revendications 7 à 10,
**caractérisé en ce qu'**un axe longitudinal de la traversée ( 14 ) pour l'extérieur disposée du côté de la surface latérale est disposée radialement par rapport à l'axe du tube du boîtier ( 2, 21, 31 ) de blindage et un axe longitudinal d'une autre traversée ( 13 ) pour l'extérieur disposée du côté de la surface latérale est disposée en oblique en étant inclinée par rapport à une radiale de l'axe du tube.

11. Ensemble ( 1, 20, 30 ) commutateur suivant l'une des revendications 7 à 10,
**caractérisé en ce que** des isolateurs ( 15a, b ) de maintien de l'unité ( 3 ) d'interrupteur sont disposés latéralement sur l'unité ( 3 ) d'interrupteur.
